Europäisches Patentamt

**European Patent Office**

Office européen des brevets

(19)

(11) Numéro de publication : **0 027 410**
**B1**

(12) **FASCICULE DE BREVET EUROPÉEN**

(45) Date de publication du fascicule du brevet :
**20.04.83**

(21) Numéro de dépôt : **80401429.8**

(22) Date de dépôt : **07.10.80**

(51) Int. Cl.³ : **H 04 Q 11/04, H 04 J 3/04**

(54) **Procédé de commutation de signaux multiplexés temporellement et transmis par une onde porteuse, en particulier une onde lumineuse, et dispositif de mise en oeuvre.**

(30) Priorité : **10.10.79 FR 7925200**

(43) Date de publication de la demande :
**22.04.81 Bulletin 81/16**

(45) Mention de la délivrance du brevet :
**20.04.83 Bulletin 83/16**

(84) Etats contractants désignés :
**DE GB IT**

(56) Documents cités :
**FR A 2 012 392**
**FR A 2 125 084**
**US E 29 215**

**ELECTRONIC DESIGN, vol. 26, no. 20, septembre 1978 New York US S. ADLERSTEIN : « Electro-optic crystal devices supply missing fiber-optic links », pages 34 et 35**

**PATENT ABSTRACTS OF JAPAN, vol. 2, no. 149, 13 décembre 1978 page 9459 E 78 Tokyo JP**

(73) Titulaire : **THOMSON-CSF TELEPHONE**
**146, Boulevard de Valmy**
**F-92707 Colombes (FR)**

(72) Inventeur : **Broussaud, Georges Jean Gabriel**
**"THOMSON-CSF"-SCPI 173 Boulevard Haussmann**
**F-75360 Paris Cedex 08 (FR)**

(74) Mandataire : **Chaverneff, Vladimir et al**
**THOMSON-CSF SCPI 173, Bld Haussmann**
**F-75379 Paris Cedex 08 (FR)**

## Procédé de commutation de signaux multiplexés temporellement et transmis par une onde porteuse, en particulier une onde lumineuse, et dispositif de mise en œuvre

La présente invention se rapporte à un procédé de commutation de signaux multiplexés temporellement et transmis par une onde porteuse, ainsi qu'à un dispositif de mise en œuvre de ce procédé.

Le procédé de commutation temporelle actuellement utilisé dans les centraux téléphoniques numériques consiste essentiellement à transférer chaque échantillon du signal incident émis par le demandeur depuis la voie temporelle (ou intervalle de temps) correspondant à ce demandeur vers la voie temporelle du demandé. Un tel transfert nécessite la mémorisation des échantillons incidents pendant un temps qui est fonction des canaux temporels alloués au demandeur et au demandé. Toutefois, une telle mémorisation ne peut s'effectuer qu'avec des porteurs matériels immobilisables tels que des charges électriques ou des domaines magnétiques. Il n'est pas possible d'immobiliser et de mémoriser une onde électromagnétique porteuse de signal, en particulier une onde lumineuse.

Si l'on veut commuter des signaux modulant une onde lumineuse se propageant par exemple dans des fibres de verre, il faut convertir le signal lumineux en signal électrique, traiter ce signal électrique de façon habituelle, et convertir à nouveau le signal électrique résultant en un autre signal lumineux. Cette double conversion ne permet pas de tirer parti de tous les avantages que l'on peut espérer obtenir de la transmission de signaux multiplexés par voie optique.

La présente invention a pour objet un procédé permettant la commutation de signaux multiplexés temporellement et transmis par une onde porteuse, en particulier une onde lumineuse, sans nécessiter de mémorisation des signaux lors de la phase de commutation proprement dite.

La présente invention a également pour objet un dispositif de mise en œuvre de ce procédé.

Le procédé conforme à la présente invention consiste, avant la modulation de l'onde porteuse, à :

— échantillonner, le cas échéant, de façon habituelle les $m$ signaux provenant de $m$ sources et destinés à être multiplexés sur un même canal de transmission ou canal d'entrée,

— répéter chacun des échantillons $n$ fois de suite, $n$ étant un nombre entier supérieur ou égal à 2,

— multiplexer dans le temps les $m$ groupes de $n$ fois le même échantillon, puis on module de façon habituelle l'onde porteuse et on l'envoie sur le canal d'entrée, et pour commuter ce canal d'entrée sur un autre canal ou canal de sortie, on sélectionne $p$ échantillons successifs parmi les $n$ échantillons identiques successifs de chaque groupe de $n$ fois le même échantillon et on les transfère spatialement vers une voie temporelle dudit canal de sortie, voie se présentant simultanément avec au moins une partie desdits $p$ parmi $n$ échantillons, cette partie comportant toutes les informations d'au moins un échantillon.

Selon un autre aspect du procédé de la présente invention, lorsque l'on commute plusieurs canaux d'entrée différents sur un même canal de sortie, ces canaux ayant tous la même période de multiplexage temporel, le nombre de voies temporelles du canal de sortie doit être égal au produit du nombre total de voies temporelles de tous lesdits canaux d'entrée par le nombre $p$ d'échantillons sélectionnés parmi les groupes de $n$ échantillons, le nombre $n$ étant déterminé pour que la période de multiplexage du signal de chaque canal d'entrée soit occupée en totalité par des échantillons, de façon qu'il n'y ait pas de chevauchement des échantillons sur le canal de sortie et que tous les échantillons d'entrée puissent être recueillis sur le canal de sortie.

Le dispositif de mise en œuvre du procédé de l'invention comporte pour le signal produit par chaque source, des moyens d'échantillonnage de signaux modulants, des moyens pour répéter chacun des échantillons ainsi obtenus, des moyens pour moduler une onde porteuse, en particulier une onde lumineuse, avec les échantillons ainsi répétés, et une matrice de commutation assurant le transfert spatial des ondes porteuses modulées d'entrée vers une ou plusieurs des sorties de la matrice, chaque entrée de la matrice étant associée à un dispositif coupleur directif, à un dispositif détecteur de signal modulant et à un dispositif détecteur de signaux de commande de commutation et/ou de signaux de synchronisation, tous lesdits dispositifs détecteurs de signaux de commande et de synchronisation étant reliés à un calculateur lui-même relié aux entrées de commande de la matrice de commutation par l'intermédiaire de circuits d'interface, et aux sorties de cette matrice par l'intermédiaire d'autres coupleurs directifs.

Dans le mode de réalisation préféré du dispositif de l'invention pour la commutation de signaux transmis par voie optique sur fibres de verre, la matrice de commutation comporte plusieurs coupleurs directifs disposés de façon connue en soi pour que n'importe quelle entrée puisse être commutée sur n'importe quelle sortie.

La présente invention sera mieux comprise à l'aide de la description détaillée de plusieurs modes de réalisation pris comme exemples non limitatifs et illustrés par le dessin annexé, sur lequel :

la figure 1 est un chronogramme illustrant un exemple simplifié du procédé de commutation conforme à la présente invention,

la figure 2 est un bloc-diagramme d'un mode de réalisation du dispositif de l'invention,

la figure 3 est un bloc-diagramme de la matrice de commutation de la figure 2 dans le cas où cette matrice comporte quatre entrées et quatre sorties,

la figure 4 est un bloc-diagramme de la matrice de commutation de la figure 2 dans le cas où cette matrice comporte huit entrées et huit sorties, et

la figure 5 est un bloc-diagramme d'un exemple d'application du dispositif de l'invention.

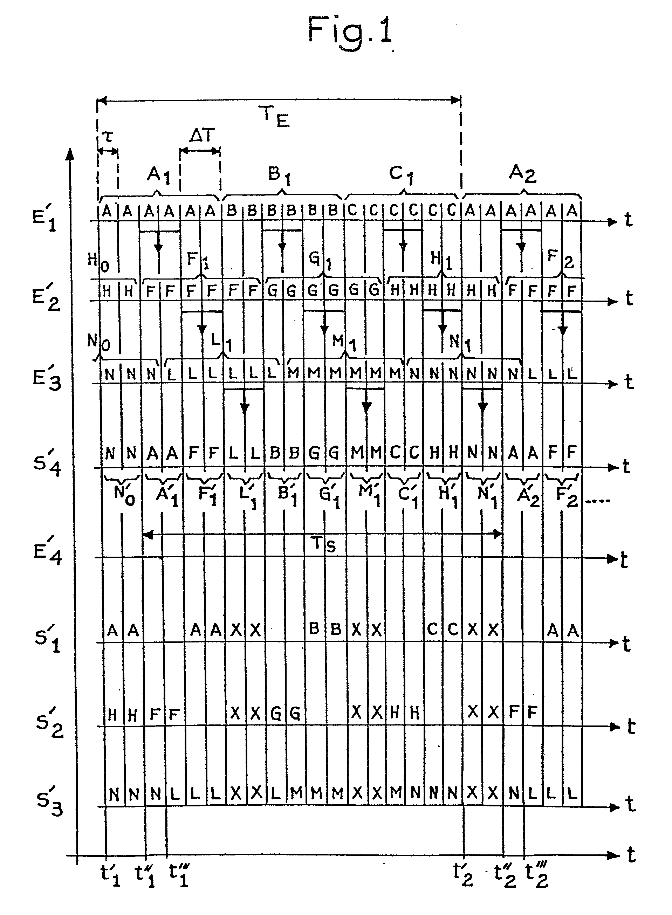

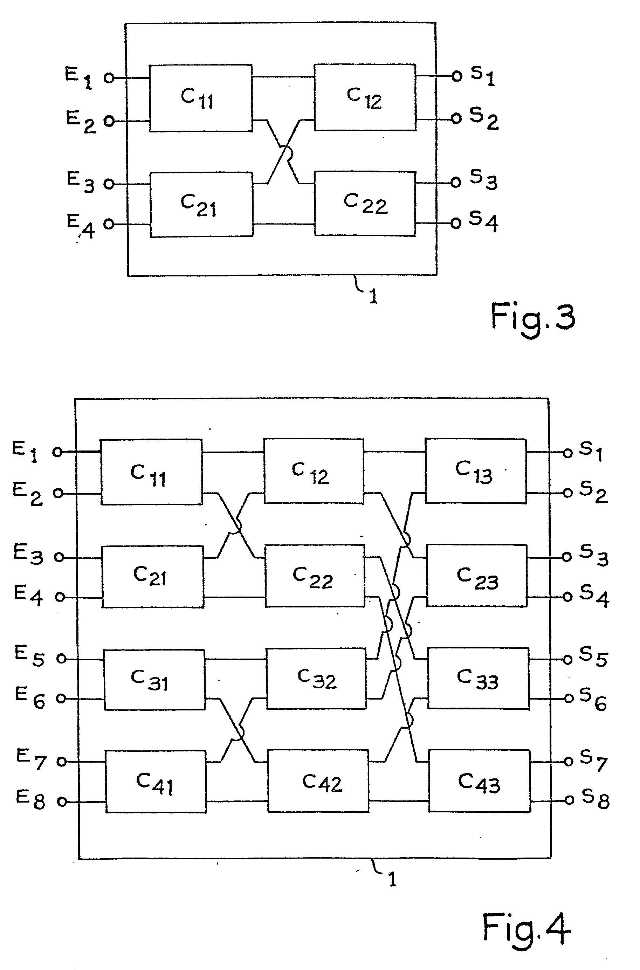

Le chronogramme de la figure 1 illustre le procédé conforme à la présente invention dans le cas simplifié où l'on veut commuter trois canaux d'entrée $E'_1$, $E'_2$ et $E'_3$ sur un canal de sortie $S'_4$, ces trois canaux d'entrée transmettant chacun trois voies multiplexées temporellement. Du fait que la matrice de commutation préférée utilisée pour la mise en œuvre de ce procédé a la conformation représentée sur la figure 3, conformation décrite ci-dessous, et comporte quatre entrées et quatre sorties, le chronogramme représenté sur la figure 1 comporte quatre lignes relatives à quatres entrées $E_1$ à $E_4$ et quatre lignes relatives à quatre sorties $S_1$ à $S_4$. Mais, étant donné que dans l'hypothèse choisie, la capacité maximale de commutation est atteinte, ainsi qu'expliqué ci-dessous, on ne peut appliquer de signal sur la quatrième entrée $E_4$. En outre, toujours pour la même hypothèse choisie, on recueille tous les signaux incidents sur un seul canal de sortie $S'_4$, ce canal de sortie correspondant à la sortie $S_4$ de ladite matrice de commutation. Toutefois, ainsi qu'on va le voir ci-dessous, étant donné que l'on dispose de quatre sorties, on pourrait utiliser n'importe laquelle d'entre elles si l'on ne désirait traiter qu'un seul canal de sortie, et l'on pourrait utiliser plusieurs d'entre elles si l'on voulait recueillir certaines mêmes informations sur plusieurs canaux à la fois, comme expliqué ci-dessous.

Il faut également noter que le procédé de la présente invention n'est pas limité par l'utilisation d'une matrice de commutation déterminée, et que beaucoup d'autres conformations de matrices de commutation peuvent être envisagées, à condition de permettre le transfert immédiat d'échantillons sélectionnés d'un canal vers un autre.

Dans le cas du chronogramme de la figure 1, on envoie sur le canal $E'_1$ les sources A, B, C, sur le canal $E'_2$ les sources F, G, H, et sur le canal $E'_3$ les sources L, M, N. Si les signaux produits par ces neuf sources sont analogiques, on les échantillonne de façon habituelle. Si ces signaux se présentent sous forme numérique, ils sont convertis, le cas échéant, de façon à pouvoir être traités comme des signaux échantillonnés habituels. Le choix du canal de sortie se fait par des signaux de commande insérés dans chaque canal d'entrée, ces signaux de commande provenant de l'une des sources précitées par exemple.

Selon le procédé de la présente invention, on répète $n$ fois de suite chaque échantillon de chaque source de signaux, $n$ étant un nombre entier supérieur ou égal à 2. En outre, on sélectionne, à chaque fois, pour le transfert subséquent vers le canal de sortie $S'_4$, par exemple deux échantillons parmi les groupes de $n$ fois le même échantillon répété successivement. On doit ainsi recueillir sur le canal de sortie $S'_4$, pour une période de multiplexage, dix-huit échantillons. La période de multiplexage $T_s$ du signal du canal de sortie $S'_4$ doit donc comporter dix-huit intervalles de temps $\tau$. Toutefois, si un plus grand nombre de canaux d'entrée ou de sources devaient être commutés sur le canal de sortie, on augmenterait en conséquence la longueur de la période $T_s$. Pour qu'il n'y ait pas de perte d'informations, la période $T_s$ du signal du canal de sortie doit être égale à la période du signal de chacun des canaux d'entrée.

Toujours selon le procédé de la présente invention, chaque échantillon étant répété $n$ fois de suite, le nombre $n$ est déterminé pour que la période $T_E$ de multiplexage du signal de chaque canal d'entrée soit occupée en totalité par des échantillons. Dans le cas présent, la période $T_E$ comporte 18 intervalles de temps et trois sources de signaux sont multiplexées sur chaque canal d'entrée, donc $n = 6$.

Le chronogramme de la figure 1 débute à un instant $t'_1$ pour lequel apparaît le premier échantillon de la source A relatif à l'instant d'échantillonnage $\theta_1$ des signaux des sources précitées. Ce chronogramme tient compte des déphasages mutuels, inévitables en pratique, des trois canaux d'entrée. Dans le cas présent, on suppose pour la clarté du dessin, que ces déphasages sont, par rapport au canal $E'_1$ pris comme référence, égaux à deux et trois intervalles de temps pour les canaux $E'_2$ et $E'_3$ respectivement. En réalité, ces déphasages sont quelconques, mais, comme on l'expliquera ci-dessous, le procédé de la présente invention permet de s'affranchir des inconvénients résultant d'un déphasage différent d'un nombre entier d'intervalles de temps. Ainsi, pour l'instant d'échantillonnage $\theta_1$, les premiers échantillons des canaux $E'_2$ et $E'_3$ apparaissent respectivement aux instants $t''_1$ et $t'''_1$. Par conséquent, sur le canal $E'_2$, les derniers échantillons relatifs à l'instant d'échantillonnage précédent $\theta_0$ apparaissent entre les instants $t'_1$ et $t''_1$, et sur le canal $E'_3$, les derniers échantillons relatifs à l'instant $\theta_0$ apparaissent entre les instants $t'_1$ et $t'''_1$.

Les groupes de six fois le même échantillon relatif à l'instant $\theta_1$, pour les sources A, B, C, F, G, H, L, M, N, sont respectivement référencés $A_1$, $B_1$, $C_1$, $F_1$, $G_1$, $H_1$, $L_1$, $M_1$ et $N_1$.

Pour effectuer la commutation des trois canaux d'entrée $E'_1$, $E'_2$ et $E'_3$ vers le canal de sortie $S'_4$, on sélectionne pendant un laps de temps $\Delta T$ deux échantillons successifs parmi les six échantillons successifs identiques de chaque groupe précité. Ainsi, par exemple, dans le canal $E'_1$, on sélectionne le troisième et le quatrième échantillons, dans le canal $E'_2$ le troisième et le quatrième échantillons également, et dans le canal $E'_3$ le quatrième et le cinquième échantillons. Étant donné les déphasages mutuels des canaux d'entrée, on voit qu'il n'y a pas de chevauchement dans le temps des différents échantillons successifs. Les échantillons sélectionnés sont aussitôt transférés spatialement vers le canal de sortie $S'_4$. On recueille donc sur $S'_4$ des groupes réduits de deux échantillons, référencés dans l'ordre $A'_1$, $F'_1$, $L'_1$, $B'_1$, $G'_1$, $M'_1$, $C'_1$, $H'_1$ et $N'_1$ qui correspondent respectivement aux échantillons relatifs à l'instant $\theta_1$ des signaux des sources A, F, L, B, G, M, C, H et N. Ce processus se répète identiquement pour les échantillons relatifs aux instants d'échantillonnage suivants $\theta_2$, $\theta_3$, etc...

Par conséquent, on recueille sur le canal de sortie $S'_4$ des échantillons provenant de toutes les sources considérées. Pour traiter ultérieurement lesdits groupes réduits d'échantillons, on sélectionne de façon appropriée un seul échantillon par groupe réduit. Dans le cas théorique exposé ci-dessus, pour lequel les déphasages mutuels des différents canaux d'entrée sont égaux à un nombre entier d'intervalles de temps, il suffirait bien entendu de sélectionner un seul échantillon parmi les $n$ échantillons identiques. Mais dans la pratique, ces déphasages mutuels sont quelconques et il est nécessaire de sélectionner au moins deux échantillons identiques. Si on sélectionne effectivement pendant le premier laps de temps $\Delta T$ de sélection, en totalité le troisième et de quatrième échantillons du groupe $A_1$, on ne pourra par exemple sélectionner pendant le laps de temps $\Delta T$ suivant que le début du troisième échantillon, tout le quatrième échantillon, et la fin du cinquième échantillon du groupe $F_1$. Il suffira alors, au moment du traitement du canal $S'_4$, de reconnaître au moins l'une des deux extrémités (le début ou la fin) des échantillons pour en reconstruire la véritable séquence des impulsions qui les composent.

Pour synchroniser le canal de sortie avec les canaux d'entrée, on peut, comme cela se fait pour la téléphonie MIC, réserver l'une des voies temporelles de chaque canal d'entrée à des signaux de verrouillage.

On a représenté sur les trois dernières lignes du chronogramme de la figure 1 les signaux de sortie des canaux $S'_1$, $S'_2$ et $S'_3$ correspondant aux sorties $S_1$, $S_2$ et $S_3$ du dispositif de commutation décrit ci-dessous en référence à la figure 3, lorsque ce dispositif est utilisé pour la mise en œuvre du procédé de l'invention. Toutefois, il est bien entendu que de nombreux autres dispositifs de commutation peuvent être utilisés pour la mise en œuvre de ce procédé, aussi bien pour les ondes lumineuses que pour les autres ondes électromagnétiques.

Comme on pourra le vérifier ultérieurement à la lumière de la description du commutateur de la figure 3, sur la ligne de la figure 1 correspondant au canal $S'_1$, les deux premiers intervalles de temps de la période $T_E$ débutant à l'instant $t'_1$ reçoivent l'échantillon venant de la source A, pendant les deux intervalles de temps suivants, c'est l'entrée $E'_4$ qui est commutée vers la sortie $S_1$ et il n'y a donc alors aucune information sur cette sortie.

Pendant le cinquième et le sixième intervalles de temps suivants, la source A est à nouveau commutée sur le canal $S'_1$. Pendant le septième et le huitième intervalles de temps, c'est-à-dire pendant que la source L du canal $E'_3$ est commutée sur le canal $S'_4$, n'importe lequel des trois autres canaux d'entrée peut être commuté sur le canal de sortie $S'_1$, et c'est pourquoi on a inscrit un X dans le septième et le huitième intervalle de temps. Pendant les autres intervalles de temps de la période $T_E$ débutant à l'instant $t'_1$, pris deux par deux, on recueille sur le canal $S'_1$ respectivement : aucune information, la source B, X, aucune information, et la source C. On constate donc que l'on peut recueillir sur le canal de sortie $S'_1$ les trois sources du canal d'entrée correspondant $E'_1$, et éventuellement trois des six sources des deux autres canaux d'entrée par sélection appropriée des intervalles de temps correspondants du canal $S'_1$.

Par un raisonnement similaire à celui exposé ci-dessus on peut démontrer facilement que le procédé de commutation de la présente invention permet, par simple commutation spatiale, de recueillir sur un canal de sortie toutes les informations provenant de plusieurs canaux d'entrée, à condition de respecter les limitations énoncées ci-dessus, à savoir : déterminer dans la période du signal de sortie un nombre d'intervalles de temps égal au produit du nombre total de voies temporelles de tous les canaux d'entrée que l'on veut commuter par le nombre d'échantillons sélectionnés parmi les groupes de $n$ échantillons identiques successifs, et déterminer le nombre $n$ pour que la période de multiplexage du signal de chaque canal d'entrée soit occupée en totalité par des échantillons.

Il est évident que le fait de répéter $n$ fois de suite chaque échantillon diminue la capacité de transmission d'un canal multiplexé, mais si l'on réduit la période d'échantillonnage des signaux à transmettre, ce qui est possible lorsque l'onde porteuse a une fréquence élevée, en particulier lorsqu'il s'agit d'une onde lumineuse, on peut même gagner en capacité de transmission par rapport aux liaisons conventionnelles actuelles telles que la téléphonie MIC. Il est également évident que le procédé de l'invention permet aussi bien le multiplexage que le démultiplexage de sources d'information.

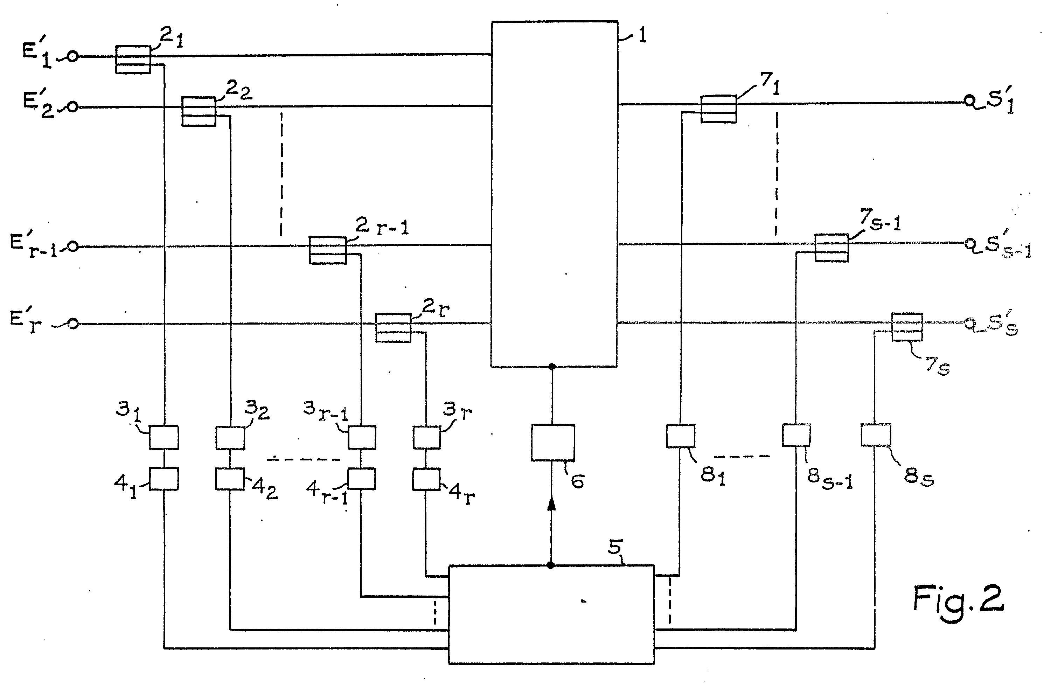

On a représenté sur la figure 2 un exemple de réalisation d'un dispositif de mise en œuvre du procédé de l'invention pour la commutation de $r$ canaux d'entrée $E'_1$ à $E'_r$, transmettant chacun plusieurs voies multiplexées temporellement, sur l'un ou plusieurs des $s$ canaux de sortie $S'_1$ à $S'_s$. Les $r$ canaux d'entrée $E'_1$ à $E'_r$ arrivent sur une matrice de commutation 1, dont deux exemples de réalisation sont décrits ci-dessous, et les $s$ canaux de sortie $S'_1$ à $S'_s$ partent de la matrice 1. Sur le trajet de chacun des canaux d'entrée $E'_1$ à $E'_r$ on intercale un coupleur directif, respectivement $2_1$ à $2_r$. Chacun des $r$ coupleurs directifs $2_1$ à $2_r$ est relié à un détecteur approprié $3_1$ à $3_r$ respectivement. Dans le cas de la transmission par ondes optiques, les détecteurs $3_1$ à $3_r$ sont du type photo-électrique. Les détecteurs $3_1$ à $3_r$ sont suivis de récepteurs $4_1$ à $4_r$, ces récepteurs étant des dispositifs capables d'isoler les signaux de commande de commutation et les signaux de verrouillage ou de synchronisation transmis par chaque canal d'entrée correspondant. Les récepteurs $4_1$ à $4_r$ sont reliés à un calculateur 5 traitant lesdits signaux de commande et de verrouillage et élaborant à partir de ces signaux des ordres de commande de commutation de la matrice 1. Les ordres de commande émis par le calculateur 5 sont envoyés à un circuit d'interface 6 fournissant les tensions ou signaux nécessaires pour assurer la commutation des éléments composant la matrice 1. Les récepteurs $4_1$ à $4_r$ peuvent éventuellement faire partie du calculateur 5.

Dans le cas où l'on désire réintroduire dans les canaux de sortie du dispositif de commutation décrit ci-dessus d'autres ordres de commande de commutation et/ou d'autres signaux de verrouillage, on fait élaborer par le calculateur 5 des informations appropriées qui sont envoyées par le calculateur à des coupleurs directifs $7_1$ à $7_s$, intercalés sur le trajet des canaux de sortie $S'_1$ à $S'_s$ respectivement, les coupleurs $7_1$ à $7_s$ étant reliés au calculateur 5 par l'intermédiaire de convertisseurs appropriés $8_1$ à $8_s$ respectivement. Dans le cas précité d'onde porteuse optique, les convertisseurs $8_1$ à $8_s$ sont du type photo-électrique.

On a représenté sur la figure 3, un exemple de réalisation de la matrice 1 à l'aide de coupleurs directifs. Dans le cas d'une onde porteuse optique, ces coupleurs directifs peuvent par exemple être des coupleurs ou commutateurs dénommés « COBRA » et décrits dans la revue « Entropie » n° 77 de 1977, pages 13 à 24.

Les deux premières entrées $E_1$ et $E_2$ de la matrice 1 sont reliées aux deux entrées d'un premier coupleur $C_{11}$, et les deux autres entrées $E_3$ et $E_4$ sont reliées aux entrées d'un deuxième coupleur $C_{21}$. Les premières sorties de $C_{11}$ et $C_{21}$ sont reliées aux entrées d'un troisième coupleur $C_{12}$, et les deuxièmes sorties de $C_{11}$ et $C_{21}$ sont reliées aux entrées d'un quatrième coupleur $C_{22}$. Les sorties de $C_{12}$ et $C_{22}$ sont reliées aux sorties $S_1$ à $S_4$ de la matrice 1. Pour la clarté du dessin, on n'a pas représenté les électrodes de commande de ces quatre coupleurs, leur branchement étant évident pour l'homme de l'art.

Sur la figure 4, on a représenté un autre exemple de réalisation de la matrice 1, avec les mêmes coupleurs, mais à huit entrées et huit sorties.

Comme dans le cas de la figure 3, des coupleurs $C_{11}$, $C_{12}$, $C_{21}$ et $C_{22}$ sont reliés aux entrées $E_1$ à $E_4$ de la matrice et sont reliés entre eux de la même façon. Un autre groupe de quatre coupleurs $C_{31}$, $C_{32}$, $C_{41}$ et $C_{42}$ sont respectivement disposés de la même façon que les quatre premiers précités et reliés aux entrées $E_5$ à $E_8$ de la matrice 1. Les sorties de $C_{12}$ et $C_{22}$ sont reliées à la première entrée de quatre autres coupleurs $C_{13}$, $C_{23}$, $C_{33}$ et $C_{43}$, respectivement, et les sorties de $C_{32}$ et $C_{42}$ sont reliées à la seconde entrée desdits quatre autres coupleurs $C_{13}$ à $C_{43}$ respectivement. Les sorties de ces quatre autres coupleurs $C_{13}$ à $C_{43}$ sont respectivement reliées aux sorties $S_1$ à $S_8$ de la matrice 1.

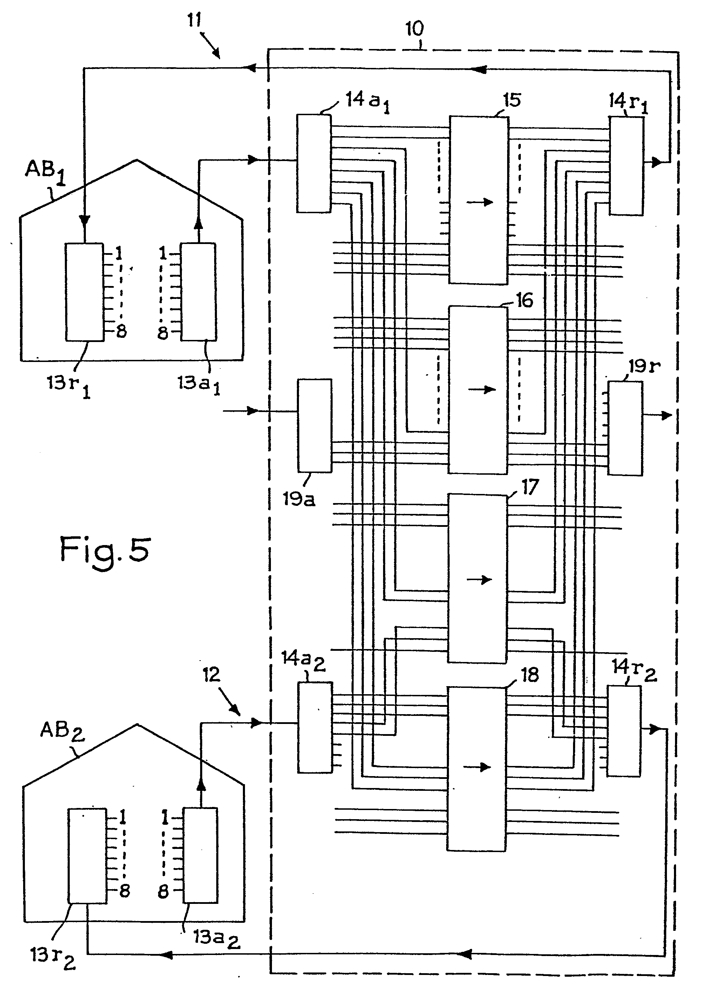

On a représenté sur la figure 5, un exemple d'application du dispositif de commutation conforme à la présente invention. Cet exemple d'application concerne un réseau de télécommunications entre des abonnés et un central urbain, ces télécommunications englobant non seulement le téléphone, mais aussi de nombreux autres services tels que la télévision, le télex, le « Vidéotex », etc... Il existe actuellement des installations de transmission par fibres de verre, mais les opérations de commutation, de multiplexage et de démultiplexage sont effectuées uniquement avec des moyens électroniques, ce qui nécessite de disposer aux extrémités de chaque fibre optique soit une source de lumière facile à moduler (diode optoélectronique ou laser), soit un dispositif de détection, par exemple une diode optoélectronique. Cette contrainte est d'autant moins tolérable que pour la réalisation de liaisons « locales », inférieures à 50 km par exemple, l'atténuation des fibres optiques est suffisamment faible pour ne pas nécessiter de régénération du signal transmis. Le dispositif de commutation de la présente invention permet de remédier en grande partie à de tels inconvénients, en particulier lorsque l'on veut commuter huit canaux ou moins, cas dans lequel une matrice telle que celle de la figure 4 apporte une atténuation encore admissible (environ 1 à 3 dB par coupleur). Ce dispositif de l'invention peut être associé à des dispositifs mécaniques ou électromécaniques de commutation de faisceaux lumineux moins rapides que lui mais présentant des pertes d'insertion plus faibles ou même à des dispositifs électroniques classiques. L'exemple d'application de la figure 4 illustre une telle possibilité d'association de dispositifs de commutation de types différents.

Sur la figure 5, on a représenté un central urbain 10 relié à des abonnés tels que $AB_1$ et $AB_2$ par des lignes 11, 12 respectivement, en fibres de verre, ces lignes comportant une fibre pour le sens « aller » de l'abonné vers le central, et une autre fibre pour le sens « retour » du central vers l'abonné. Chaque abonné dispose de plusieurs canaux de transmission, huit dans le cas présent, capables de transmettre simultanément plusieurs services différents tels que téléphone, télévision, Vidéotex, etc... chacune de ces huit voies étant spécifiquement affectée à un service particulier et possédant un numéro d'identification propre. Du fait que la transmission se fait par fibres de verre, la transmission des signaux de télévision a lieu dans d'excellentes conditions. Les différentes informations émises par les abonnés $AB_1$ et $AB_2$ sont multiplexées temporellement par des commutateurs $13a_1$ et $13a_2$ respectivement, transmises par les fibres « aller » des lignes 11 et 12 au central 10 où elles sont démultiplexées par des commutateurs $14a_1$ et $14a_2$. Les différentes informations émises par le central 10 vers ces abonnés sont multiplexées par des commutateurs $14r_1$ et $14r_2$, transmises par les fibres « retour » des lignes 11 et 12, et démultiplexées

chez les abonnés AB₁ et AB₂ par des commutateurs 13r₁ et 13r₂, respectivement. Tous les commutateurs précités sont avantageusement réalisés conformément à la présente invention.

Dans le central 10, des commutateurs centraux, tels que les quatre commutateurs 15, 16, 17 et 18 assurent la liaison des abonnés à différents réseaux de distribution d'informations par l'intermédiaire des commutateurs 13a, 13r, 14a, 14r précités. Chacun des commutateurs de central tels que les commutateurs 15 à 18 peut être affecté à un service particulier et relié à la voie spécifique correspondante des démultiplexeurs 14a ou des multiplexeurs 14r. Les commutateurs tels que 15 à 18 sont, de préférence, du type optique à commande électromécanique si l'abonné demandé se trouve dans une région directement accessible par voie optique, c'est-à-dire sans régénération ou amplification du signal émis par le demandeur. C'est, par exemple, le cas du commutateur 17 qui permet à l'abonné AB₁ d'entrer en communication bidirectionnelle avec l'abonné AB₂ par commutation optique via les commutateurs 13a₁, 14a₁, 17, 14r₂ et 13r₂ dans un sens, et via les commutateurs 13a₂, 14a₂, 17, 14r₁ et 13r₁ dans l'autre. En outre, le commutateur 14r₂, par exemple, permet à l'abonné AB₂ de recevoir simultanément d'autres informations émises par d'autres abonnés et passant par d'autres commutateurs centraux du central 10. Dans le cas où l'abonné demandé se trouve dans une région non directement accessible par voie optique, les liaisons sont établies par des commutateurs centraux électroniques classiques à multiplexage temporel.

Le central 10 comporte également des commutateurs tels que les commutateurs 19a et 19r le reliant à d'autres centraux urbains, de transit, ou de tout autre genre. Dans le cas illustré par la figure 5, le commutateur 19a est un démultiplexeur envoyant les informations extérieures vers le central 10, et le commutateur 19r est un multiplexeur envoyant les informations émises par le central 10 vers d'autres centraux. Ces deux commutateurs 19a et 19r sont par exemple reliés au commutateur central 16, et peuvent être de type optique à commande électromécanique ou de type électronique suivant la nature des lignes assurant la liaison aux autres centraux.

**Revendications**

1. Procédé de commutation de signaux multiplexés temporellement et transmis par une onde porteuse, en particulier une onde lumineuse, les signaux provenant de *m* sources et étant destinés à être multiplexés temporellement sur un même canal de transmission ou canal d'entrée, caractérisé par le fait qu'avant la modulation de l'onde porteuse par ces signaux et leur multiplexage temporel, on répète chacun des échantillons de ces signaux *n* fois de suite, *n* étant un nombre entier supérieur ou égal à 2, par le fait que l'on multiplexe dans le temps les *m* groupes de *n* fois le même échantillon, par le fait que l'on module de façon habituelle l'onde porteuse avec les échantillons ainsi répétés et multiplexés, et que l'on envoie cette onde porteuse ainsi modulée sur le canal d'entrée et par le fait que pour commuter ce canal d'entrée sur un autre canal, ou canal de sortie, on sélectionne *p* échantillons successifs parmi les *n* échantillons identiques successifs de chaque groupe de *n* fois le même échantillon et on les transfère spatialement vers une voie temporelle dudit canal de sortie, cette voie temporelle se présentant simultanément avec au moins une partie desdits *p* parmi *n* échantillons, cette partie comportant toutes les informations d'au moins un échantillon.

2. Procédé de commutation selon la revendication 1, pour la commutation de plusieurs canaux d'entrée différents sur un même canal de sortie, ces canaux ayant tous la même période de multiplexage temporel, caractérisé par le fait que le nombre de voies temporelles du canal de sortie est égal au produit du nombre total de voies temporelles de tous lesdits canaux d'entrée par le nombre *p* d'échantillons sélectionnés, le nombre *n* étant déterminé pour que la période de multiplexage du signal de chaque canal d'entrée soit occupée en totalité par des échantillons.

3. Dispositif de mise en œuvre du procédé selon l'une quelconque des revendications 1 ou 2, caractérisé par le fait qu'il comporte pour le signal produit par chaque source, des moyens d'échantillonnage de signaux modulants, des moyens pour répéter chacun des échantillons ainsi obtenus, des moyens pour moduler une onde porteuse, en particulier une onde lumineuse, avec les échantillons ainsi répétés, et par le fait qu'il comporte une matrice de commutation (1) dont chaque entrée (E'₁ à E'ᵣ) reçoit une onde porteuse ainsi modulée, chaque entrée de la matrice étant associée à un dispositif coupleur directif (2₁ à 2ᵣ), à un dispositif détecteur de signal modulant (3₁ à 3ᵣ) et à un dispositif détecteur (4₁ à 4ᵣ) de signaux de commande de commutation et/ou de signaux de synchronisation, tous lesdits dispositifs détecteurs de signaux de commande et de synchronisation étant reliés à un calculateur (5) lui-même relié aux entrées de commande de la matrice de commutation par l'intermédiaire de circuits d'interface (6), et aux sorties (S'₁ à S'ₛ) de cette matrice par l'intermédiaire d'autre coupleurs directifs (8₁ à 8ₛ).

4. Dispositif selon la revendication 3, pour la commutation de signaux transmis par voie optique sur fibres de verre, caractérisé par le fait que la matrice de commutation comporte plusieurs coupleurs directifs (C₁₁ à C₂₂ — fig.3 ou C₁₁ à C₄₃ — fig.4) disposés de façon connue en soi pour que n'importe quelle entrée puisse être commutée sur n'importe quelle sortie.

**Claims**

1. A process for switching timewise multiplexed signals transmitted by a carrier wave, more specifically a light wave, such signals coming from *m*

sources and intended to be multiplexed timewise on a single transmission channel or input channel, characterized by the fact that before modulation of the carrier wave by these signals and their timewise multiplexing each sample of these signals is repeated $n$ times in succession, where $n$ is an integer greater than or equal to 2, by the fact that the $m$ groups of $n$ times the same sample are multiplexed timewise, by the fact that the carrier wave with the samples thus repeated and multiplexed is modulated in the usual way, and that this carrier wave, thus modulated, is dispatched on the input channel, and by the fact that, in order to switch this imput channel to another channel, or output channel, $p$ successive samples are selected from the $n$ identical successive samples in each group of $n$ times the same sample, and transferred spatially to a time channel of the output channel, this time channel occuring simulteneaously with at least one part of the same number $p$ of the $n$ samples, this part comprising all the data of at least one sample.

2. A switching process as defined in claim 1, to switch several different input channels on to a single output channel, these channels all having the same timewise multiplexing period, characterized by the fact that the number of time channels in the output channel is equal to the product of the total number of time channels in all input channels by the number $p$ of samples selected, the number $n$ being so chosen that the period of multiplexing of the signal on each input channel is fully occupied by samples.

3. A device to perform the process as defined in either one of claims 1 and 2, characterized by the fact that it comprises, for the signal produced by each source, means of sampling modulating signals, means of repeating each of the signals thus obtained, means of modulating a carrier wave, more specifically a light wave, with the samples thus repeated, and by the fact that it comprises a switching matrix (1), each input ($E'_1$ to $E'_r$) of which receives a carrier wave thus modulated, each matrix input being accompanied by a directive coupler device ($2_1$ to $2_r$), a modulating signal detector ($3_1$ to $3_r$), and a switching control signal and/or synchronization signal detector ($4_1$ to $4_r$), all such control and synchronization signal detectors being connected to a computer (5), which is itself connected to the control inputs of the switching matrix by means of interface circuits (6), and to the outputs ($S'_1$ to $S'_s$) of the matrix by means of other directive couplers ($8_1$ to $8_s$).

4. A device as defined in claim 3, to switch signals transmitted by optical transmission on glass fibres, characterized by the fact that the switching matrix comprises several directive couplers ($C_{11}$ to $C_{22}$ in Fig. 3, or $C_{11}$ to $C_{43}$ in Fig. 4), arranged in a way known per se, so that any input can be switched to any output.

**Ansprüche**

1. Verfahren zum Kommutieren zeitweilig multiplexierter und vermittels einer Trägerwelle, insbesondere einer Lichtwelle, Übertragener Signale, die von $m$ Quelle herrühren und dazu bestimmt sind, zeitweilig in ein und demselben Uebertragungskanal oder Eingangskanal multiplexiert zu werden, dadurch gekennzeichnet, dass man vor der Modulation der Trägerwelle durch diese Signale und vor dem zeitweiligen Multiplexieren derselben nacheinander $n$ mal Muster dieser Signale Wiederholt, wo $n$ eine ganze Zahl ist, die gleich 2 oder grösser als 2 ist, dass man in herkömmlicher Weise die Trägerwelle mit den derart wiederholten und multiplexierten Mustern moduliert, und dass man die derart modulierte Trägerwelle in den Einganskanal einleitet, und ferner dadurch, dass man zwecks Umschaltens dieses Eingangskanals auf einen anderen Kanal bzw. Ausgangkanal $p$ Muster unter den aufeinanderfolgenden gleichen Mustern jeder $n$ mal dasgleiche Muster umfassenden Gruppe wählt und die gewählten Muster in Raum an eine Zeitleitung des Ausgangskanals anlegt, die gleichzeitig wenigstens einen Teil dieser unter den $n$ Mustern gewählten $p$ Muster aufweist, wobei dieser Teil von Mustern alle Informationen wenigstens eines Musters umfasst.

2. Kommutationsverfahren nach Anspruch 1, zum Kommutieren auf einen und denselben Ausgangskanal einer Mehrzahl von verschiedenen Eingangskanälen, die jeweils die gleiche Zeitmultiplexierungsperiode besitzen, dadurch gekennzeichnet, dass die Anzahl der Zeitleitungen des Ausgangskanals dem Produkt aus der Gesamtanzahl der Zeitleitungen aller Eingangskanäle und der Anzahl $p$ gewählter Muster gleich ist, wobei die Grösse $n$ derart berechnet ist, dass die Multiplexierperiode des Signals eines jeden Eingangskanals durch Muster völlig ausgefüllt ist.

3. Vorrichtung zur Durchführung des Verfahrens nach Anspruch 1 oder 2, dadurch gekennzeichnet, dass sie für das von jeder Quelle erzeugte Signal Modulierungssignal-Musterungsmittel, Mittel zum Wiederholen eines jeden der derart erhaltenen Signale, Mittel zum Modulieren einer Trägerwelle, insbesondere einer Lichtwelle, mit den derart wiederholten Mustern, dass die Vorrichtung eine Kommutationsmatrize (1) aufweist, deren jeder Eingang ($E'_1$ bis $E'_r$) eine derart modulierte Trägerwelle empfängt, wobei jeder Eingang der Matrize einem einer Richtkoppelungseinrichtung ($2_1$ bis $2_r$), einer Moduliersignal-Fühleinrichtung ($3_1$ bis $3_r$) und einer Kommutations-Steuersignal- bzw. Synchronisationssignal-Fühleinrichtung zugeordnet ist, und wobei alle Steuersignal- und Synchronisationssignalfühlvorrichtungen mit einem Rechner (5) verbunden sind, der seinerseits über Zwischenflächenstromkreise (6) an die Steuereingänge der Kommutationsmatrize, sowie über andere Richtkoppelungseinrichtungen ($8_1$ bis $8_s$) an die Ausgänge dieser Matrize angeschlossen sind.

4. Vorrichtung nach Anspruch 3, zum Kommutieren von durch optisch vermittels Glasfasern übertragener Signale, dadurch gekennzeichnet, dass die Koppelungsmatrize eine Mehrzahl von Richtkoppelungseinrichtungen ($C_{11}$ bis $C_{22}$ —

Fig. 3 bzw. $C_{11}$ bis $C_{43}$ — Fig. 4) aufweist, die in sich an bekannter Weise derart angeordnet sind, dass jeder beliebige Eingang an jeden beliebigen Ausgang anschliessbar ist.

# Fig.1

Fig.2

0 027 410

Fig.3

Fig.4

Fig. 5